# EUROPÄISCHE PATENTSCHRIFT

(11) **EP 2 788 191 B1**
(45) Veröffentlichungstag und Bekanntmachung des Hinweises auf die Patenterteilung: **27.07.2016**
(21) Anmeldenummer: 12812165.4
(22) Anmeldetag: 10.12.2012
(51) Int. Cl.: B32B 37/02, B32B 37/12, E04F 15/10

(54) **TRANSFERVERFAHREN ZUR HERSTELLUNG THERMOPLASTISCHER BESCHICHTUNGEN VON FUSSBODENFLIESEN**
TRANSFER METHOD FOR PRODUCING THERMOPLASTIC COATINGS FOR FLOOR TILES
PROCÉDÉ DE TRANSFERT POUR LA RÉALISATION DE REVÊTEMENTS THERMOPLASTIQUES DE DALLES DE SOL

(30) Priorität: 09.12.2011 DE 102011120702
(43) Veröffentlichungstag der Anmeldung: 15.10.2014
(73) Patentinhaber: Süddekor GmbH, 89150 Laichingen (DE)
(72) Erfinder: HALLER, Heinz, 73207 Plochingen (DE)
(74) Vertreter: Müller-Boré & Partner Patentanwälte PartG mbB
(86) Internationale Anmeldenummer: PCT/EP2012/005094
(87) Internationale Veröffentlichungsnummer: WO 2013/083290

(56) Entgegenhaltungen:
- WO-A1-03/012224
- WO-A1-2010/149710
- DE-A1-102010 022 535

## Beschreibung

Die vorliegende Erfindung betrifft ein Verfahren zur Herstellung eines dekorativen, abriebfesten Laminats, in welchem eine thermoplastische Nutzschicht mittels eines Transferverfahrens auf ein Substrat aufgebracht wird. Desweiteren betrifft die vorliegende Erfindung die Verwendung des durch das erfindungsgemäße Verfahren hergestellten Laminats für flexible und starre Fußböden.

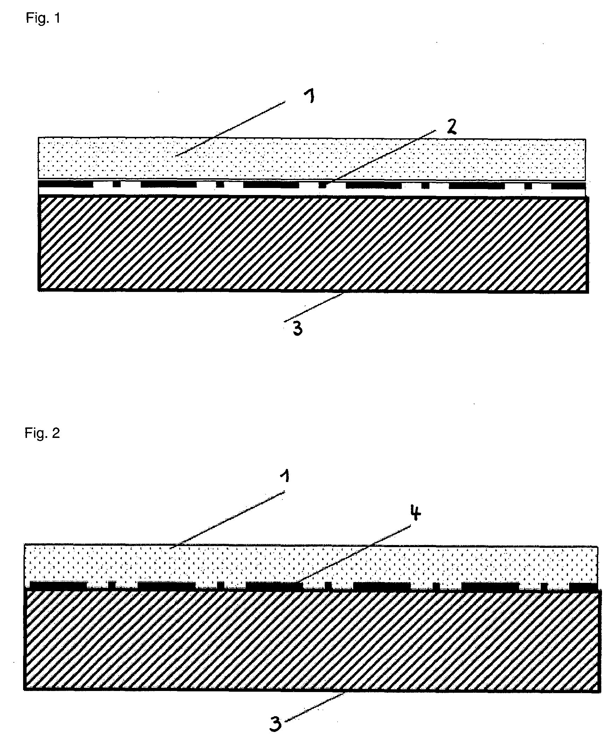

Aus dem Stand der Technik ist die Herstellung sogenannter LVTs (Luxury Vinyl Tiles), die als direkt verklebbare Fussbodenfliesen verwendet werden, bekannt. Derartige LVTs bestehen üblicherweise aus einem Kunsstoffsubstrat, meist Polyvinylchlorid (PVC), einer bedruckten Folie (der sogenannte Printfilm oder Dekorfilm), die ebenfalls aus PVC besteht, und einer transparenten Nutzschicht (Wearlayer), die das auf dem Printfilm aufgebrachte Dekor vor einer Beschädigung schützt (siehe Figur 1). Die transparente Nutzschicht besteht dabei meist aus PVC oder anderen transparenten Kunststoffen und kann entweder glatt oder strukturiert sein. Falls eine strukturierte Nutzschicht erwünscht wird, so wird dies in der Regel durch Prägen der Nutzschicht realisiert. Die Dicke der Nutzschicht, die üblicherweise bis zu 1 mm betragen kann, ist gleichzeitig auch ein Maß für die Abriebfestigkeit der Fussbodenfliese.

Neuere Entwicklungen haben gezeigt, dass es möglich ist, Kunstofffliesen der oben genannten Art auch derart herzustellen, dass die Fliese nicht direkt auf den Untergrund geklebt werden muss. Dies wird dadurch ermöglicht, dass das Substrat mit Fugen und Federn versehen wird, die eine mechanische Selbstverriegelung der einzelnen Fliesen ermöglicht, so dass der gesamte Belag schwimmend verlegt werden kann. Das Substrat kann hierbei sowohl aus Kunststoff, aus Holz-KunststoffGemischen oder aus Holzwerkstoffen bestehen.

WO 2010/149710 A und die darin zitierten Dokumente beschreiben Verfahren zur Erhöhung der Ritzhärte eines Körpers.

Der vorliegenden Erfindung liegt die Aufgabe zugrunde, ein Verfahren bereitzustellen, das es ermöglicht, ein Laminat, zum Beispiel für flexible und starre Fussbodenfliesen, herzustellen. Insbesondere soll ein Verfahren bereitgestellt werden, das es ermöglicht, eine thermoplastische Nutzschicht in geeigneter Weise auf ein Substrat aufzubringen, um daraus ein wasserfestes und abriebbeständiges Laminat für Fussbodenfliesen herzustellen. Darüber hinaus soll es durch das erfindungsgemäße Verfahren auch möglich sein, dekorative und haptische Eigenschaften des Laminats zu realisieren, so dass die Oberfläche des Laminats hinsichtlich ihrer Haptik und Optik synchron und stimmig ist.

Diese Aufgabe wird durch die in den Ansprüchen gekennzeichneten Ausführungsformen der vorliegenden Erfindung gelöst.

Insbesondere wird erfindungsgemäß ein Verfahren zur Herstellung eines dekorativen, abriebfesten Laminats bereitgestellt, wobei das Verfahren die folgenden Schritte umfasst:
(a) Aufbringen eines Thermoplasts als Schmelze auf einen flexiblen, bahnförmigen Träger, dessen Oberfläche leicht haftende Eigenschaften aufweist, zur Bildung einer thermoplastischen Nutzschicht;
(b) Abkühlen der auf dem Träger befindlichen thermoplastischen Nutzschicht;
(c) Übertragen der Nutzschicht auf ein Substrat durch Aufschmelzen des mit der Nutzschicht versehenen, bahnförmigen Trägers auf das Substrat bei erhöhter Temperatur, wobei ein Verbund, umfassend, in dieser Reihenfolge, das Substrat, die Nutzschicht und den Träger, gebildet wird;
(d) Abkühlen des Verbundes; und
(e) Entfernen des bahnförmigen Trägers von der Nutzschicht,
wobei nach dem Schritt (b) und vor dem Schritt (c) die auf dem bahnförmigen Träger aufgebrachte thermoplastische Nutzschicht mit einem Konterdruck versehen wird und das Druckbild des Konterdrucks derart positioniert wird, dass es synchron zu der Struktur des bahnförmigen Trägers verläuft.

Der Begriff "dekorativ" bedeutet erfindungsgemäß, dass das Laminat ein- oder mehrfarbig gemustert ist und eine strukturierte Oberfläche aufweist, um andere Beläge, wie zum Beispiel Keramikfliesen oder Holzparkett, optisch und/oder haptisch nachzuahmen.

Der Begriff "abriebfest" bedeutet erfindungsgemäß, dass das Laminat beständig gegen mechanische Einwirkung ist.
Im Schritt (a) des erfindungsgemäßen Verfahrens wird ein Thermoplast als Schmelze auf einen flexiblen, bahnförmigen Träger, dessen Oberfläche leicht haftende Eigenschaften aufweist, aufgebracht, um eine thermoplastische Nutzschicht zu bilden.

Der Begriff "Thermoplast" unterliegt erfindungsgemäß keiner Einschränkung. Bevorzugt wird erfindungsgemäß ein Thermoplast verwendet, der in einer thermoplastische Nutzschicht resultiert, die sowohl abriebfeste, also auch transparente Eigenschaften aufweist. Gemäß einer bevorzugten Ausführungsform umfasst der Thermoplast zur Bildung der thermoplastische Nutzschicht Polypropylen, thermoplastisches Polyurethan, thermoplastisches Polyamid und/oder thermoplastischer Polyester, oder Kombinationen davon.

Das Aufbringen des Thermoplasts als Schmelze auf den Träger unterliegt keiner Einschränkung. Gemäß einer bevorzugten Ausführungsform wird der Thermoplast nach dem Aufschmelzen in einem Extruder mit Hilfe einer Schlitzdüse auf den bahnförmigen Träger zur Bildung einer thermoplastischen Nutzschicht aufgebracht. Das Aufschmelzen des Thermoplasts im Extruder erfolgt dabei bevorzugt in einem Temperaturbereicht von 200°C bis 320°C, abhängig vom verwendeten Thermoplast. So erfolgt beispielsweise das Aufschmelzen von Polypropylen bevorzugt bei Temperaturen von 200°C bis 250°C, von Polyurethanen bevorzugt bei Temperaturen von 170°C bis 220°C, von Polyamiden bevorzugt bei Temperaturen von 250°C bis 320°C und von Polyestern bevorzugt bei 180°C bis 250°C. Der heiße Schmelzfilm wird dann üblicherweise in einem Walzenspalt direkt auf den Träger aufgebracht. Die Auftragungsmenge des Thermoplasts zur Bildung der thermoplastischen Nutzschicht auf dem Träger liegt bevorzugt in einem Bereich von 25 g/m² bis 350 g/m². Die Stärke der Nutzschicht beträgt in Abhängigkeit des spezifischen Gewichts des Beschichtungsmaterials bei Polypropylen bevorzugt 20 bis 320 µm, bei Polyurethanen 30 bis 450 µm und bei Polyamiden 30 bis 400 µm.

Im Schritt (b) des erfindungsgemäßen Verfahrens wird die auf dem Träger befindliche thermoplastische Nutzschicht abgekühlt. Dies erfolgt beispielsweise dadurch, dass die beschichtete Seite des Trägers unmittelbar nach Aufbringen des Thermoplasts im Schritt (a) um eine Kühlwalze geführt wird, wo die Schmelze erstarrt und die Oberfläche der Kühlwalze adaptiert. Das Abkühlen der auf dem Träger befindlichen thermoplastischen Nutzschicht im Schritt (b) wird bis zu einer Temperatur von 80°C bis 20°C, bevorzugt bis zur Raumtemperatur durchgeführt.

Der flexible, bahnförmige Träger unterliegt erfindungsgemäß nur der Einschränkung, dass die Oberfläche des Träger leicht haftende Eigenschaften aufweist. Unter "flexibel" wird erfindungsgemäß verstanden, dass sich der bahnförmige Träger über die Leitwalzen einer handelsüblichen Beschichtungsmaschine führen lässt. Unter "leicht haftenden Eigenschaften" wird erfindungsgemäß verstanden, dass die thermoplastische Nutzschicht nach Bildung auf dem Träger im Schritt (a) und nachfolgender Abkühlung im Schritt (b) ausreichende Haftung zum Träger aufweist, so dass es möglich ist, den Träger mit der aufgebrachten Nutzschicht wieder aufzuwickeln und einer möglichen Weiterverarbeitung zuzuführen. Auf der anderen Seite muss die Haftung der thermoplastischen Nutzschicht zum Träger allerdings auch schwach genug sein, um den Träger bei Temperaturen von 20°C bis 80°C wieder von der thermoplastischen Nutzschicht trennen zu können. Die Oberfläche des Trägers ist definiert durch Glanzgrad und Struktur. Gemäß einer bevorzugten Ausführungsform ist der Träger ein strukturiertes Trennpapier. Das Trennpapier besteht vorzugsweise aus einem gestrichenen Papier oder Karton mit einer bevorzugten Dicke von 150 bis 250 µm, wobei das Papier bzw. der Karton mit einer temperaturfesten Trennbeschichtung beschichtet ist.

Im Schritt (c) des erfindungsgemäßen Verfahrens wird die Nutzschicht auf ein Substrat übertragen. Die Übertragung erfolgt dabei durch Aufschmelzen des mit der Nutzschicht versehenen, bahnförmigen Trägers auf das Substrat bei erhöhter Temperatur. Dabei wird ein Verbund gebildet, der, in dieser Reihenfolge, das Substrat, die Nutzschicht und den Träger umfasst.

Der Begriff "Substrat" unterliegt erfindungsgemäß keiner Einschränkung; es können sowohl starre als auch flexible Substrate verwendet werden. Gemäß einer bevorzugten Ausführungsform ist das erfindungsgemäße Substrat ein starres Substrat, bestehend aus Holzwerkstoffplatten (z.B. HDF, MDF, Spanplatten, OSB-Platten), Platten aus Kunststoffgemischen (z.B. Polyvinylchlorid, Polypropylen), Holz-Kunstoffgemischen (z.B. WPC) oder Gipsplatten. Gemäß einer alternativ bevorzugten Ausführungsform ist das Substrat ein flexibles Substrat, bestehend aus Polyvinylchlorid, Polypropylen, Polyurethan, Polyester oder Gemischen verschiedener Kunststoffe mit bevorzugten Dicken von 1 bis 6 mm.

Durch die erhöhte Temperatur im Schritt (c) schmilzt die thermoplastische Nutzschicht, wodurch sie sich zumindest adhäsiv mit dem Substrat verbindet. Gemäß einer bevorzugten Ausführungsform der vorliegenden Erfindung wird das Aufschmelzen in einem Temperaturbereich von 180°C bis 220°C durchgeführt. Die erforderliche Temperatur wird dabei beispielsweise elektrisch oder durch Thermoöl beheizte Walzen, Bänder oder Platten herbeigeführt und so auf den Verbund übertragen.

Im nachfolgenden Schritt (d) des erfindungsgemäßen Verfahrens wird der im Schritt (c) gebildete Verbund, umfassend das Substrat, die Nutzschicht und den Träger, abgekühlt. Beispielsweise wird dabei der Verbund zwischen wassergekühlten Walzen, Bändern oder Platten hindurchgeführt. Vorzugsweise wird auf einen Temperaturbereich von 20°C bis 80°C abgekühlt.

Im Schritt (e) des erfindungsgemäßen Verfahrens wird der bahnförmige Träger von der Nutzschicht entfernt; zurück bleibt das fertige Laminat, umfassend die thermoplastische Nutzschicht und das Substrat, wobei die Nutzschicht zumindest adhäsiv mit dem Substrat verbunden ist. Die Entfernung des Trägers wird vorzugsweise bei der Temperatur durchgeführt, auf welche im Schritt (d) des erfindungsgemäßen Verfahrens abgekühlt wurde, da in diesem Temperaturbereich der bahnförmige Träger nur geringe Hafteigenschaften aufweist und leicht von der Nutzschicht entfernt werden kann. Der bahnförmige Träger kann anschließend aufgewickelt werden, wobei eventuell verbleibende Rückstände durch entsprechende bekannte Reinigungsvorrichtungen, wie zum Beispiel Bürsten oder Blaseinrichtungen, von der Trägeroberfläche entfernt werden. Der bahnförmige Träger kann anschließend erneut als Träger im Schritt (a) des erfindungsgemäßen Verfahrens verwendet werden.

Die Strukturierung der Oberfläche der Nutzschicht wird durch die Oberflächenstruktur des bahnförmigen Trägers bestimmt. Diese Oberflächenstruktur kann durch Prägen oder Abformen des Trägers realisiert werden. Da im Schritt (a) des erfindungsgemäßen Verfahrens die thermoplastische Nutzschicht durch Aufbringen einer Schmelze eines Thermoplasts gebildet wird, adaptiert die Nutzschicht die Oberflächenstruktur des Trägers. Dadurch können vorteilhafterweise sowohl der Glanzgrad des Trägers, als auch Strukturen mit Tiefen bis zu 150 µm auf die thermoplastische Nutzschicht übertragen werden.

Erfindungsgemäß wird nach dem Schritt (b) und vor dem Schritt (c) die auf dem bahnförmigen Träger aufgebrachte thermoplastische Nutzschicht auf der Oberfläche mit einem Konterdruck versehen, der spiegelbildlich aufgebracht wird. Der Konterdruck befindet sich nach dem Aufschmelzen der Nutzschicht im Schritt (c) auf der Seite der Nutzschicht, die mit der Oberfläche des Substrats in Kontakt ist (siehe Figur 2) und ist dadurch vor mechanischer Beschädigung durch Abrieb und vor Wasser geschützt. Der erfindungsgemäße Konterdruck dient als Dekoration der Oberfläche, wodurch vorteilhafterweise auf das Einbringen eines Printfilms zu Dekorationszwecken verzichtet werden kann. Voraussetzung für diese Vorgehensweise ist eine farblich homogene Oberfläche des Substrats. Gemäß einer bevorzugten Ausführungsform der vorliegenden Erfindung erfolgt der Konterdruck mit einem lösungsmittelfreien Tiefdruckverfahren oder einem lösungsmittelfreien Digitaldruckverfahren.

Erfindungsgemäß wird das Druckbild des Konterdrucks derart positioniert, dass es synchron zu der Struktur des bahnförmigen Trägers verläuft. Dazu werden beispielsweise bei der Prägung des Trägers Markierungen aufgebracht, die beim Aufbringen des Konterdrucks auf die thermoplastische, transparente Nutzschicht erfasst und verarbeitet werden können, um eine derartige Positionierung zu realisieren. Auf diese Weise besteht die Möglichkeit, ein Laminat herzustellen, dessen Oberfläche hinsichtlich ihrer Optik und Haptik synchron und stimmig ist. Diese Vorgehensweise wird zum Beispiel bei der Darstellung von Holzreproduktionen verwendet, bei denen der Wunsch besteht, dass Holzporen dort zu fühlen sind, wo sie auch optisch dargestellt sind.

Ein weiterer Gegenstand der vorliegenden Erfindung betrifft die Verwendung des durch das erfindungsgemäße Verfahren hergestellten Laminats für flexible und starre Fußböden.

Die vorliegende Erfindung ermöglicht die Herstellung eines abriebfesten Laminats mittels eines Transferverfahrens. Das Verfahren ermöglicht es vorteilhafterweise, das Laminat bei der Herstellung dekorativ zu gestalten. Die dekorative Gestaltung wird dabei über einen Konterdruck realisiert, wodurch kostengünstig auf einen Printfim verzichtet werden kann. Durch Strukturierung des erfindungsgemäßen Trägers wird zudem die Nutzschicht des Laminats vorteilhafterweise auch haptisch gestaltet. Das erfindungsgemäß hergestellte Laminat eignet sich hervorragend zur Verwendung zum Beispiel für Fußbodenfliesen. Durch Kombination von Bedruckung und Strukturierung im erfindungsgemäßen Verfahren können vorteilhafterweise gewöhnliche Bodenbeläge, wie zum Beispiel Keramikfliesen oder Parkettböden, sowohl optisch als auch haptisch nachgeahmt werden.

Die Figuren zeigen:
- Figur 1:: Schematischer Aufbau von LVTs (Luxury Vinyl Tiles)
- Figur 2:: Schematischer Aufbau eines erfindungsgmäß hergstellten Laminats mit Konterdruck

### Bezugszeichenliste

- 1: Nutzschicht (Wearlayer)
- 2: Dekorfilm (Printfilm)
- 3: Substrat
- 4: Konterdruck

## Patentansprüche

1. Verfahren zur Herstellung eines dekorativen, abriebfesten Laminats, umfassend die Schritte:
(a) Aufbringen eines Thermoplasts als Schmelze auf einen flexiblen, bahnförmigen Träger, dessen Oberfläche leicht haftende Eigenschaften aufweist, zur Bildung einer thermoplastischen Nutzschicht (1);
(b) Abkühlen der auf dem Träger befindlichen thermoplastischen Nutzschicht (1);
(c) Übertragen der Nutzschicht (1) auf ein Substrat (3) durch Aufschmelzen des mit der Nutzschicht (1) versehenen, bahnförmigen Trägers auf das Substrat (3) bei erhöhter Temperatur, wobei ein Verbund, umfassend, in dieser Reihenfolge, das Substrat (3), die Nutzschicht (1) und den Träger, gebildet wird;
(d) Abkühlen des Verbundes; und
(e) Entfernen des bahnförmigen Trägers von der Nutzschicht (1),
wobei nach dem Schritt (b) und vor dem Schritt (c) die auf dem bahnförmigen Träger aufgebrachte thermoplastische Nutzschicht (1) mit einem Konterdruck (4) versehen wird und das Druckbild des Konterdrucks (4) derart positioniert wird, dass es synchron zu der Struktur des bahnförmigen Trägers verläuft.

2. Verfahren nach Anspruch 1, wobei die Oberfläche des bahnförmigen Trägers auf der Seite, auf der die thermoplastische Nutzschicht (1) im Schritt (a) aufgebracht wird, strukturiert ist und die Nutzschicht (1) im Schritt (c) beim Laminieren die Oberflächenstruktur des Trägers adaptiert.

3. Verfahren nach Anspruch 1 oder 2, wobei der bahnförmige Träger ein strukturiertes Trennpapier ist.

4. Verfahren nach einem der Ansprüche 1 bis 3, wobei die thermoplastische Nutzschicht (1) Polypropylen, thermoplastisches Polyurethan, thermoplastischen Polyester und/oder thermoplastisches Polyamid, oder Kombinationen davon, umfasst.

5. Verfahren nach einem der Ansprüche 1 bis 4, wobei das Substrat (3) ein starres Substrat, ausgewählt aus der Gruppe, bestehend aus Holzwerkstoffplatten, Platten aus Kunststoffgemischen, Holz-Kunststoffgemischen und Gipsplatten, oder ein flexibles Substrat, ausgewählt aus der Gruppe, bestehend aus Polyvinylchlorid, Polypropylen, Polyurethan, Polyester und Gemischen verschiedener Kunststoffe, ist.

6. Verfahren nach einem der Ansprüche 1 bis 5, wobei im Schritt (a) die thermoplastische Nutzschicht (1) nach Aufschmelzen des Thermoplasts in einem Extruder mit Hilfe einer Schlitzdüse auf den bahnförmigen Träger aufgebracht wird.

7. Verfahren nach einem der Ansprüche 1 bis 6, wobei die Auftragungsmenge des Thermoplasts auf den Träger im Schritt (a) von 25 g/m² bis 350 g/m² ist.

8. Verfahren nach einem der Ansprüche 1 bis 7, wobei der Konterdruck (4) mit einem lösungsmittelfreien Tiefdruckverfahren oder einem lösungsmittelfreien Digitaldruckverfahren erfolgt.

9. Verfahren nach einem der Ansprüche 1 bis 8, wobei das Aufschmelzen im Schritt (c) bei 180 bis 220°C durchgeführt wird.

10. Verfahren nach einem der Ansprüche 1 bis 9, wobei im Schritt (d) auf 60 bis 80°C abgekühlt wird.

11. Verwendung des durch ein Verfahren nach einem der Ansprüche 1 bis 10 hergestellten Laminats für flexible und starre Fußböden.

## Claims

1. A process for the production of a decorative, abrasion-resistant laminate, comprising the following steps:
(a) application of a thermoplastic as melt to a flexible carrier web, the surface of which has slightly adhesive properties, in order to form a thermoplastic wearlayer;
(b) cooling of the thermoplastic wearlayer located on the carrier;
(c) transfer of the wearlayer to a substrate via melting of the carrier web, provided with the wearlayer, onto the substrate at elevated temperature, thus forming a composite comprising, in this sequence, the substrate, the wearlayer, and the carrier;
(d) cooling of the composite; and
(e) removal of the carrier web from the wearlayer,
where, after the step (b) and before the step (c), the thermoplastic wearlayer applied on the carrier web is provided with a reverse print, and the print image of the reverse print is positioned in such a way as to be synchronous with respect to the structure of the carrier web.

2. The process as claimed in claim 1, where that side of the surface of the carrier web on which the thermoplastic wearlayer is applied in the step (a) has a structure, and during the lamination in the step (c) the wearlayer adapts the surface structure of the carrier.

3. The process as claimed in claim 1 or 2, where the carrier web is a structured release paper.

4. The process as claimed in any of claims 1 to 3, where the thermoplastic wearlayer comprises polypropylene, thermoplastic polyurethane, thermoplastic polyester, and/or thermoplastic polyamide, or a combination thereof.

5. The process as claimed in any of claims 1 to 4, where the substrate is a rigid substrate selected from the group consisting of sheets of wood-based material, sheets of plastics mixtures, wood-plastics mixtures, and gypsum plasterboard, or a flexible substrate selected from the group consisting of polyvinyl chloride, polypropylene, polyurethane, polyester, and mixtures of various plastics.

6. The process as claimed in any of claims 1 to 5, where, in the step (a) after melting of the thermoplastic in an extruder, the thermoplastic wearlayer is applied to the carrier web with the aid of a slot die.

7. The process as claimed in any of claims 1 to 6, where the quantity of the thermoplastic applied to the carrier in the step (a) is from 25 g/m² to 350 g/m².

8. The process as claimed in any of claims 1 to 7, where the reverse print is achieved by a solvent-free intaglio printing process or by a solvent-free digital printing process.

9. The process as claimed in any of claims 1 to 8, where the melting in the step (c) is carried out at from 180 to 220°C.

10. The process as claimed in any of claims 1 to 9, where the temperature to which cooling is carried out in the step (d) is from 60 to 80°C.

11. The use of the laminate produced via a process as claimed in any of claims 1 to 10 for flexible and rigid floorcoverings.

## Revendications

1. Procédé servant à fabriquer un stratifié décoratif, résistant à l'usure, comprenant les étapes consistant à :
(a) appliquer une matière thermoplastique sous la forme d'une matière fondue sur un support flexible en forme de bande, dont la surface présente des propriétés d'adhésion modérée, afin de former une couche utile (1) thermoplastique ;
(b) refroidir la couche utile (1) thermoplastique se trouvant sur le support ;
(c) transférer la couche utile (1) sur un substrat (3) en faisant fondre le support en forme de bande pourvu de la couche utile (1), sur le substrat (3) à une température élevée dans lequel est obtenu un composite comprenant, dans cet ordre, le substrat (3), la couche utile (1) et le support ;
(d) refroidir le composite ; et
(e) retirer le support en forme de bande de la couche utile (1),
dans lequel la couche utile (1) thermoplastique appliquée sur le support en forme de bande est pourvue, après l'étape (b) et avant l'étape (c), d'une impression en transparence (4) et que l'image imprimée de l'impression en transparence (4) est positionnée de telle manière qu'elle s'étend de manière synchrone en direction de la structure du support en forme de bande.

2. Procédé selon la revendication 1, dans lequel la surface du support en forme de bande est structurée sur le côté, sur lequel est appliquée, à l'étape (a), la couche utile (1) thermoplastique, et que la couche utile (1) adapte, à l'étape (c), lors du laminage, la structure de surface du support.

3. Procédé selon la revendication 1 ou 2, dans lequel le support en forme de bande est un papier de séparation structuré.

4. Procédé selon l'une quelconque des revendications 1 à 3, dans lequel la couche utile (1) thermoplastique comprend du polypropylène, du polyuréthane thermoplastique, du polyester thermoplastique et/ou du polyamide thermoplastique, ou des combinaisons de ces derniers.

5. Procédé selon l'une quelconque des revendications 1 à 4, dans lequel le substrat (3) est un substrat rigide, choisi parmi le groupe constitué par des panneaux dérivés du bois, des panneaux composés de mélanges de plastique, des mélanges de bois et de plastique et des panneaux de plâtre, ou est un substrat flexible choisi parmi le groupe constitué par le polychlorure de vinyle, le polypropylène, le polyuréthane, le polyester et des mélanges de différentes matières plastiques.

6. Procédé selon l'une quelconque des revendications 1 à 5, dans lequel la couche utile (1) thermoplastique est appliquée, à l'étape (a), après la fusion de la matière thermoplastique dans une extrudeuse, à l'aide d'une tuyère à fente, sur le support en forme de bande.

7. Procédé selon l'une quelconque des revendications 1 à 6, dans lequel la quantité d'application de la matière thermoplastique sur le support à l'étape (a) va de 25 g/m² à 350 g/m².

8. Procédé selon l'une quelconque des revendications 1 à 7, dans lequel l'impression en transparence (4) est effectuée avec un procédé d'héliogravure sans solvant ou un procédé d'impression numérique sans solvant.

9. Procédé selon l'une quelconque des revendications 1 à 8, dans lequel la fusion est réalisée à l'étape (c) à une température allant de 180 à 220 °C.

10. Procédé selon l'une quelconque des revendications 1 à 9, dans lequel le refroidissement est réalisé à l'étape (d) afin d'établir la température à 60 à 80 °C.

11. Utilisation du stratifié fabriqué par un procédé selon l'une quelconque des revendications 1 à 10 pour des planchers flexibles et rigides.
